Europäisches Patentamt

European Patent Office

Office européen des brevets

(11) Publication number: **0 246 566 B1**

# EUROPEAN PATENT SPECIFICATION

(45) Date of publication of patent specification: **29.07.92**　(51) Int. Cl.⁵: **C09D 5/10**, C09D 183/02

(21) Application number: **87107028.0**

(22) Date of filing: **14.05.87**

(54) An anti-corrosive paint composition.

(30) Priority: **20.05.86 JP 115408/86**

(43) Date of publication of application:
**25.11.87 Bulletin 87/48**

(45) Publication of the grant of the patent:
**29.07.92 Bulletin 92/31**

(84) Designated Contracting States:
**BE DE ES FR GB GR IT NL SE**

(56) References cited:
**EP-A- 0 061 223**
**GB-A- 2 004 560**

(73) Proprietor: **NIPPON OIL AND FATS COMPANY, LIMITED**
**10-1, Yuraku-cho 1-chome**
**Chiyoda-ku Tokyo(JP)**

(72) Inventor: **Sano, Shunichi**
**3-55-402, Obayashi 4-chome**
**Takarazuka-Shi(JP)**

(74) Representative: **Patentanwälte Grünecker, Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an anti-corrosive paint composition which is effective as a primary anti-corrosive paint for a large-size steel structure and has excellent heat resistance besides good exposure and anti-corrosive property, welding property, gas cutting property and compatibility to top coat.

To build large size steel structures such as ships off-shore and on-shore structures, a primary surface treatment is done by shot blasting or sand blasting, and then a primary anti-corrosive paint is coated, e.g., a wash primer, a zinc-rich epoxy primer or an inorganic zinc-rich primer.

Although these anti-corrosive paints have different anti-corrosive intervals, they provide a given anti-corrosive effect for the general portion (mainly flat portion) of the steel structure.

With the recent size increase of the steel structure, however, welded portions and removal of deformations due to welding have increased, resulting in corrosion problems due to damages affected by heat.

To solve these problems, it is necessary to carry out a secondary rust removal of heat damaged areas by sand blasting, power tools or hand tools.

To this end, a great deal of manual labor is necessary.

In the prior art, inorganic zinc-rich primers consist of an inorganic vehicle and a high concentration of zinc dust.

Therefore, the degradation due to heat damage was limited to a minimum, and the corrosion of the heat damaged portion did not give any substantial problem.

However, zinc fumes produced at the time of welding and gas cutting, led to sanitation problems, or poor adhesion of oil-based paints.

For these reasons, it was inevitable to reduce the zinc dust concentration, and recently modified inorganic zinc-rich primers have been adopted mostly in ship yards.

In GB-A 2004560 a zinc-rich anti-corrosion paint is disclosed which comprises a silicate as a binder, zinc powder as an anti-corrosive pigment and 0,05 to 2,0 parts by weight of ultrafine particulate aluminium oxide or titanium oxide per 100 parts by weight of the zinc powder to prevent the formation of white deposits (corrosion products of zinc) to facilitate uniform dispersion of the zinc powder into the binder, to prevent occurence of agglomeration in the zinc powder etc. In the case that, however, the ultrafine particulate oxide is incorporated in an amount larger than 2.0 parts by weight per 100 parts by weight of the zinc powder, the anti-corrosion potential is brought close to the potential of iron. Accordingly, in this case, white deposit is not formed but an electrochemical action sufficient to prevent corrosion of steel cannot be attained and corrosion of steel (formation of rust) takes place. Further, since the volume of the ultrafine particulate oxide is increased, the viscosity of the composition is increased and the adaptability to the coating operation is drastically degraded.

It was intended to replace a part of ethyl silicate which is a vehicle of an inorganic zinc rich primer, with polyvinyl butyral resin being an organic polymer, and also to reduce the zinc dust concentration, thereby preventing the draw-backs of the above-mentioned inorganic zinc-rich primer.

However, since the inorganic primer in the composition decomposes, the heat resistance of the modified inorganic zinc rich primer is reduced, and the anti-corrosive property affected by heat is extremely reduced.

The prior art primary anti-corrosive paints for steel have been effectively utilized to make use of their respective features, but the corrosion of the portion under heat influence still remains an unsolved problem.

Particularly, in the circumstances where "rust prevention tactics" are practiced in various forms mainly in shipbuilding yards, an improvement of the heat resistance of the primary anti-corrosive paint for steel is desired.

It is the object of the invention to provide an anti-corrosive paint composition with improved heat resistance so that the exposure anti-corrosive properties of the back surface of the welding are improved and the deformation is reduced to permit a reduction of the secondary rust removal.

This object is achieved by an anti-corrosive paint composition comprising a vehicle, zinc dust and titanium oxide, said vehicle being a hydrolyzed condensate of tetraalkoxy silane with an alkoxy group whose carbon number is 1 to 5, characterized in that the pigment concentration is 40 to 60% by volume, the zinc dust concentration in the dry paint film is 5 to 25% by volume, and the titanium oxide concentration is 10 to 30% by volume.

The tetraalkoxy silane employed according to the invention has an alkyl group carbon whose number is 1 to 5. Examples are tetramethoxy silane, tetraethoxy silane, tetrapropyoxy silane, tetraisopropyoxy silane and tetrabutoxy silane.

An alkyl group having a carbon number of more than 6 is undesired because the hardening property is extremely reduced.

Tetraalkoxy silane is incapable of building a film, so that it is condensed by hydrolysis into a vehicle using, as a catalyst, an inorganic acid such as hydrochloric acid, nitric acid and sulfuric acid or a mixture of such an inorganic acid with formic acid or acetic acid.

Zinc dust employed according to the invention is spherical or flake-like in shape, and it is used in an amount of 5 to 25% by volume, preferably 8 to 20% by volume, in the dry film.

When its amount is less than 5% by volume, the cohesion and anti-corrosive property of the paint are reduced. When its amount is in excess of 25% by volume, the compatibility of the overcoating paint with an oil based paint deteriorates.

Titanium oxide employed according to the invention is of the rutile type or anatase type or a mixture of these two types. Its amount is 10 to 30% by volume, preferably 15 to 25% by volume, in the dry film.

When the amount is less than 10% by volume, the heat resistance is reduced, and also the wear-proof property is reduced due to insufficient cohesion.

When the amount is in excess of 30% by volume, the dry film is too hard, and the impact is reduced.

As has been shown, according to the invention a hydrolyzed condensate of tetraalkoxy silane is used as a vehicle and zinc dust and titanium oxide are used as essential pigments.

The insoluble action necessary for the building of the film, has heretofore been provided by an interaction between the silicon and zinc dust.

According to the invention, titanium oxide is added to these two components, and a tertiary system, consisting of silicate, zinc dust and titanium oxide, constitutes a film building element.

In addition to this tertiary film building element it is also possible to use pigments generally used for paints, e.g., silica powder, talc, mica iron oxide, chromium oxide, iron phosphate and alloy powders.

The overall volume concentration of the pigments is 40 to 60%, preferably 45 to 55%.

When the concentration is less than 40%, the drying property is reduced.

When the concentration exceeds 60%, the impact property is deteriorated.

When the paint prepared according to the invention is used as a primary anti-corrosive paint for steel, the heat resistance is immensely improved compared to the modified inorganic zinc-rich primers, which are currently mainly used, while the workability is the same with the prior art paint.

Consequently, the exposure anti-corrosive property of the back surface of welding and removal of deformation is extremely improved to permit a reduction of the secondary rust removal.

Further, heretofore, when an oil-based paint is coated over a modified inorganic zinc-rich primer and is placed in a humid environment, there was a peeling.

The paint according to the invention exhibits satisfactory adherence even when it is kept in a humid environment.

Further, by eliminating the organic polymer and reducing the zinc dust concentration, the welding property and gas cutting property are reduced compared to the modified inorganic zinc-rich primer and a high level quality balance can be obtained as the primary anti-corrosive primer for steel.

The following examples illustrate the invention. Unless otherwise specified, parts and % are parts by weight and % by weight.

Reaction with Titanium oxide.

The capability of a reaction between titanium oxide and hydrolyzed condensate of tetraalkoxy silane is verified by the following test.

Various pigments shown in Table 1 which are generally employed for paints as well as titanium oxide were suspended in an amount of 20% by volume in a hydrolyzed condensate of tetra-alkoxy silane (i.e., tetraethoxy silane).

Each suspension thus obtained was coated using a spray and applied in a dry film thickness of 30 to 40 $\mu$m on a sand-blasted steel plate, which was then set at room temperature for 24 h.

Thereafter, various physical properties of the dry film, e.g., wear-proof property and rubbing after 48-day immersion in MEK, were measured.

The results of the measurement are shown in Table 1.

Table 1 : Physical properties of various pigments/ethyl silicate hydrolyzed condensate paint film

| Pigment | Wear-Proof test | Rubbing test after 48-hour immersion in MEK | Paint film after heating at 800°C for 15 minutes |
|---|---|---|---|
| Zinc dust | ◎ | ◎ | Oxidation occurred, there by cohesion is reduced |
| Iron phosphate | ○ | ○ | Breakdown of paint film |
| Zinc phosphate | × | × | Same as above |
| Aluminium Phosphate | × | × | Same as above |
| Mica | × | × | Same as above |
| Talc | × | × | Same as above |
| Baryta | × | × | Same as above |
| Chromium Oxide | ○ | △ | Reduction of adhesion but paint film is intact |
| Iron Oxide | ○ | △ | Same as above |
| Titanium Oxide | ◎ | ◎ | Paint film is intact, and no reduction in adhesion is recognized |
| Zinc Oxide | ○ | △ | Paint film is intact, but the adhesion is reduced. |
| None (clear system) | × | × | Paint film is peeled. |

◎ : Excellent, ○ : normal, △ : slightly poor, × : poor

Preparation of Vehicle Solution

Example 1

40 parts of tetraethoxy silane, 20 parts of isopropyl alcohol and 5 parts of isopropyl alcohol containing 5% of ferric chloride as shown in Table 2, were put into a reactor made of stainless steel.

Then, the content in the reactor was agitated while increasing its temperature to 30°C.

Then, 4.8 parts of an aqueous solution containing 0.3% of hydrochloric acid solution was dropped into the system in 30 min, and the content was heated to 50°C and was then agitated at 50°C for 2 h.

Then, the system was diluted by adding 30.2 parts of isopropyl alcohol to obtain vehicle A with 26% of non-volatile matter.

Examples 2 and 3

Materials for respective vehicles of example 2 and 3 B and C were mixed in the formulated ratio as shown in Table 2, and the mixtures were processed similar to Example 1 to obtain vehicles B and C.

For every vehicle, the non-volatile matter was 26%.

EP 0 246 566 B1

Table 2

| Manufacturing Examples Vehicle code | Vehicle A | Vehicle B | Vehicle C |
|---|---|---|---|
| Tetraethoxy silane (Ethyl silicate 40 : a Trade Mark, maderby) Nippon Colcoat Co., Ltd. | 40.0 Parts | Parts | Parts |
| Tetraisopropioxy silane (Reagent) | | 40.0 | |
| Tetrabuthoxy silane (Reagent) | | | 40.0 |
| Isopropyl alcohol | 20.0 | 20.0 | 20.0 |
| Ferric chloride solution (5wt% solution of isopropyl alcohol) | 5.0 | 5.0 | 5.0 |
| 0.3Wt% solution of hydrochloride | 4.8 | 4.8 | 4.8 |
| Isopropyl alcohol | 30.2 | 30.2 | 30.2 |
| total | 100.0 Parts | 100.0 Parts | 100.0 Parts |

Table 3 : Formulation

| | Example (wt%) | | | | | | | | | | | | Comparative Example (wt%) | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 |
| **Vehicle** | | | | | | | | | | | | | | | | | |
| Vehicle A | 41.1 | 30.1 | 31.2 | 30.8 | 30.6 | | | | | | | | 41.3 | 30.0 | 21.2 | 20.3 | 25.2 |
| Vehicle B | | | | | | 38.4 | 42.7 | 30.0 | 22.1 | 38.4 | 44.8 | 34.8 | | | | | |
| Vehicle C | | | | | | | | | | | | | | | | | |
| **resin solution #1** | | | | | | | | | | | | | | | | | |
| Polyvinyl butyral | | | | | | | | | | | | | 5.9 | 2.4 | 2.4 | | |
| **Pigment** | | | | | | | | | | | | | | | | | |
| Zinc dust (in sphere : Trade Mark produced by Sakai Industry Co., Ltd.) | 28.6 | | 7.4 | 15.6 | | 20.4 | 9.8 | | 22.9 | | 11.2 | 15.2 | 34.6 | 27.9 | 25.1 | 42.1 | 34.7 |
| Zinc dust (in flake : Trade Mark : produced by Sakai Industry Co., Ltd.) | | 10.2 | | | 20.6 | | | | | 20.9 | | | | | | | |
| Zinc dust ZF, made by Sakai Industry Co., Ltd.) | | | | | | | | 13.7 | | | | | | | | | |
| Titanium oxide (Rutyl type : Produced by Teikoku Chemical Industry Co.,Ltd.) | 7.8 | 17.2 | 22.4 | 11.1 | 14.3 | 10.9 | | 16.3 | | 12.4 | 22.5 | | | | | | |
| Titanium oxide (Anatase, Trade Mark: Titanium JR-602) | | | | | | | 16.2 | | 6.8 | | | 12.7 | | | | | |
| Talc | | | 12.2 | | | 4.4 | | | | | 2.0 | | | | | | 4.4 |
| Mica | 2.9 | | | | | | | | | 3.2 | | | | 3.3 | | | |
| Chromium Oxide | | | | | | 4.5 | | 5.9 | | 3.5 | 2.0 | 6.5 | | 5.0 | | | |
| Iron Oxide | | 15.0 | | | 7.1 | | | | 14.7 | | | 6.5 | | 6.5 | 18.0 | | |
| Al – Zn alloy dust #2 | | | | 15.3 | | | 12.9 | | | | | | | | | 3.8 | |
| Iron phosphate | | | | | | | | | | | | | | | | 8.1 | 7.2 |
| Silica powder | | | | | | | | 5.9 | | | | | | 2.4 | | | 7.2 |
| **Solvent** | | | | | | | | | | | | | | | | | |
| Isopropyl alcohol | 19.6 | 27.5 | 26.8 | 27.2 | 27.4 | 21.4 | 18.4 | 28.2 | 33.5 | 21.6 | 17.5 | 24.3 | 19.3 | 22.9 | 32.3 | 25.7 | 21.3 |
| total | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| O Pigment Volume % | 40 | 52 | 58 | 48 | 50 | 45 | 48 | 56 | 58 | 45 | 42 | 50 | 37 | 46 | 55 | 65 | 63 |
| O Volume % of Zinc Dust (Vol %) | 23.0 | 9.0 | 5.5 | 14.5 | 18.5 | 16.0 | 6.5 | 11.0 | 12.5 | 16.5 | 8.5 | 12.0 | 24.0 | 24.0 | 28.0 | 40.0 | 28.0 |
| O Vol % of titanium oxide | 11.0 | 25.0 | 29.0 | 18.0 | 22.5 | 15.0 | 19.0 | 23.0 | 24.0 | 17.0 | 28.0 | 17.5 | — | — | — | — | — |

#1   20% isopropyl alcohol solution of Eslec BL-1 (Polyvinyl Butyral produced by Sekisui Chemical Co.,Ltd.)

#2   Heat proof aluminum alloy pigment 60 - 650 (Produced by Toyo aluminum Co. Ltd.)

Examples 1 to 12, Comparative Examples 1 to 5

Pigment and solvent were added to a mixture containing vehicle in proportions as shown in Table 3, and the admixtures were sufficiently agitated with a dissolver to obtain the respective anti-corrosive paint compositions.

These anti-corrosive paint compositions were tested in the following procedures for evaluation with the following evaluation standards.

EP 0 246 566 B1

(I) Test procedure and Evaluation Standards

Each anti-corrosive paint composition was coated by manual spraying them on to a polished soft steel plate rinsed by xylol to a dry film thickness of 20 $\mu$m, followed by setting in a room for 2 h.

Then, the paint film was observed visually and was graded with the following standards.

O: the paint film, which is uniform and sufficiently dry so that it is judged to be satisfactory

△: the coating film, which is partially non-uniform which gives practical failure and is judged to be unsatisfactory

X: the coating film, which is non-uniform and is judged to be practically unsatisfactory

(II) Heat Resistance Test

Each anti-corrosive paint composition was coated on a sandblasted steel plate (70 x 150 x 1.6mm) by air spray to a dry film thickness of 20 $\mu$m, followed by setting in a room for 48 h, heating in an electric furnace at 800°C for 20 min and then water cooled.

Then, the peeling of the paint film was examined with a cellophane tape, and the heat resistance was judged by the following evaluation standards with the peeling area being the measurement and scale of the heat resistance.

O: the paint film with a peeling area of 0 to 10 % so that it is judged to be satisfactory

△: the paint film with a peeling area of 11 to 50 % so that it is judged to be practically unsatisfactory

X: the paint film with a peeling area over 50 % so that it is judged to be practically unsatisfactory

(III) Anti-corrosive property Test after Heat Resistance Test

The test plate obtained in the method of the test (II) (without peeling with cellophane tape) was subjected to a salt water spray test and an outdoor exposure test to evaluate the anti-corrosive property.

The evaluation standards are as follows.

O: the paint film with a rusted area of 0 to 3 % so that it is judged to be satisfactory

△: the paint film with a rusted area of 4 to 10 % so that it is judged to be practically unsatisfactory

X: the paint film with a rusted area of 11 % or above so that it is judged to be practically unsatisfactory

(IV) Compatibility Test to Topcoat

Each anti-corrosive paint composition was coated on a sand-blasted steel plate (70 x 150 x 1.6mm) by an air spray to a dry film thickness of 15 to 20 $\mu$m.

The coated steel plate was set for 48 h followed by heating in an electric furnace at 800°C for 20 min (the procedure being referred to as (a)) and then outdoor exposure for 7 days (the procedure being referred to as (b)).

After procedure (a) and (b), an oil based anti-corrosive paint was coated by an air spray to have dry film thickness of 30 $\mu$m.

The coated plate was then subjected to a 240-h salt water spray test, and then to an adhesion test.

The evaluation was done by a cross cut test (at a 2-mm interval) with cellophane tape.

The evaluation standards were as follows.

O: the paint film with the non peeled paint film of 100/100 to 90/100 so that it is judged to be satisfactory

△: the paint film with the non peeled film of 89/100 to 70/100 so that it is judged to be practically satisfactory

X: the paint film with the non peeled film of 71/100 or below so that it is judged to be practically unsatisfactory

(V) Gas Cutting Property Test

Each anti-corrosive paint composition was coated on a sand-blasted steel plate (500 x 100 x 16mm) with an air spray to have a dry film thickness of 20 $\mu$m, followed by setting for 48 h.

Then, a cutting speed for WES Class 1 cutting surface was obtained using a "Type Gas Cutter" (a trade name by Tanaka Seisakusho Co., Ltd.) under conditions of an oxygen pressure of 343 kPa (3.5 kg/cm), an acetylene pressure of 49 kPa (0.5 kg/cm$^2$) and a nozzle of No. 2.

A cutting speed of 450 mm/min, or above is satisfactory.

8

Welding Test

Each anti-corrosive paint composition was coated on a sand-blasted 50-kg class high tension steel (500 x 100 x 16mm, with end surfaces polished with grinder) with an air spray to a dry film thickness of 20 $\mu$m (end surfaces also being coated), followed by setting for 48 h.

Then, fillet welding was done by the carbon acid gas welding (wire: KC 50, 1.2 mm in diameter, CO/Ar - 6/4, current : 250 A), and the appearance of beads and blow pin holes were examined.

The evaluation standards were as follows.

O: the appearance of beads and blow pin holes are both satisfactory so that it is judged that there is no substantial problem

$\triangle$: the appearance of beads and blow pin holes are both unsatisfactory so that it is judged that they are practically unfit for use

X: the appearance of beads and blow pin holes are defective so that it is judged that they are practically unsatisfactory

The results of the above tests are shown in Table 4.

As it is obvious from the results of tests shown in Table 4, the Examples 1 to 12 according to the invention all show satisfactory results.

On the other hand, the Comparative Examples which are outside the scope of the invention show unsatisfactory results at least in either one of the tests, and they are liable to present problems in actual use.

**Table 4**

| | Example | | | | | | | | | | | | Comparative Example | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 |
| (I) Appearance of the coated film | O | O | O | O | O | O | O | O | O | O | O | O | O | O | O | △ | △ |
| (II) Heat Resistance Test | O | O | O | O | O | O | O | O | O | O | O | O | O | O | O | △ | △ |
| (III) Anti-corrosive after Heat Resistance Test / Anti-corrosive Test — Salt water spraying test | O | O | O | O | O | O | O | O | O | O | O | O | × | × | × | △ | △ |
| (III) Outdoor exposure test | O | O | O | O | O | O | O | O | O | O | O | O | △ | × | × | △ | △ |
| (IV) Compatibility test to Topcoat — (a) After Heat Resistance Test | O | O | O | O | O | O | O | O | O | O | O | O | × | × | × | × | × |
| (IV) (b) After Outdoor exposure Test | O | O | O | O | O | O | O | O | O | O | O | O | × | △ | △ | × | × |
| (V) Gas Cutting Property test — Cutting velocity mm / min | 450 | 550 | 550 | 520 | 500 | 550 | 580 | 550 | 450 | 550 | 550 | 550 | 400 | 450 | 420 | 350 | 400 |
| (VI) Welding Property test | O | O | O | O | O | O | O | O | O | O | O | O | × | △ | × | × | × |

## Claims

1. An anti-corrosive paint composition comprising a vehicle, zinc dust and titanium oxide, said vehicle being a hydrolyzed condensate of tetraalkoxy silane with an alkoxy group whose carbon number is 1 to

10

EP 0 246 566 B1

5, characterized in that the pigment concentration is 40 to 60 % by volume, the zinc dust concentration in the dry paint film is 5 to 25 % by volume, and the titanium oxide concentration is 10 to 30 % by volume.

**2.** The anti-corrosive paint composition according to claim 1, wherein tetraalkoxy silane is a vehicle obtained through hydrolysis and condensation using an inorganic acid as catalyst such as hydrochloric acid, nitric acid and sulfuric acid or a mixture of such an inorganic acid and formic acid and acetic acid.

**Revendications**

**1.** Composition pour peinture anti-corrosion comprenant un excipient, de la poussière de zinc et de l'oxyde de titane, ledit excipient étant un condensat hydrolysé de tétraalkoxy silane avec un groupement alkoxy dont le nombre carbone est compris entre 1 et 5, caractérisé en ce que la concentration en pigment est comprise entre 40 et 60 % en volume, la concentration en poudre de zinc dans le film de peinture sèche est de 5 à 25 % en volume, la concentration de l'oxyde de titane est de 10 à 30 % en volume.

**2.** Composition pour peinture anti-corrosion selon la revendication 1, caractérisée en ce que le tétraalkoxy silane est un excipient obtenu par hydrolyse et condensation en présence d'un acide minéral comme catalyseur tel que l'acide chlorhydrique, l'acide nitrique et l'acide sulfurique ou un mélange de tels acides minéraux et d'acide formique et d'acide acétique.

**Patentansprüche**

**1.** Anti-korrosive Farbzusammensetzung, umfassend ein Bindemittel, Zinkstaub und Titanoxid, wobei das Bindemittel ein hydrolysiertes Kondensat von Tetraalkoxysilan mit einer Alkoxygruppe, deren Kohlenstoffzahl 1 bis 5 beträgt, ist, dadurch gekennzeichnet, daß die Pigmentkonzentration 40 bis 60 Vol.-%, die Zinkstaubkonzentration in dem trockenen Farbfilm 5 bis 25 Vol.-% und die Titanoxidkonzentration 10 bis 30 Vol.-% beträgt.

**2.** Anti-korrosive Farbzusammensetzung nach Anspruch 1, worin das Tetraalkoxysilan ein Bindemittel ist, das erhalten wird durch Hydrolyse und Kondensation unter Verwendung einer anorganischen Säure als Katalysator, wie Salzsäure, Salpetersäure und Schwefelsäure oder einer Mischung aus einer solchen anorganischen Säure und Ameisensäure und Essigsäure.